# EUROPÄISCHE PATENTANMELDUNG

(11) **EP 2 434 624 A1**
(43) Veröffentlichungstag der Anmeldung: **28.03.2012**
(21) Anmeldenummer: 10400052.6
(22) Anmeldetag: 27.09.2010
(51) Int. Cl.: H02K 29/03, H02K 41/03, H02K 1/24, B23Q 7/14

(54) **Lineardirektantrieb und Transportsystem**

(71) Anmelder: Festo AG & Co. KG, 73734 Esslingen (DE)
(72) Erfinder: Ralf Hartramph, 73095 Albershausen (DE); Peter Löbelenz, 73660 Urbach (DE); Frank Maschkiwitz, 73061 Ebersbach (DE)
(74) Vertreter: Kocher, Mark Werner

(57) **Zusammenfassung**

Die Erfindung betrifft einen Lineardirektantrieb mit einem Stator (100) und einem längs einer Bewegungsachse (2) relativbeweglich am Stator (100) angeordneten Läufer (45), wobei der Stator (100) und der Läufer (45) an einander gegenüberliegenden Oberflächen (23, 24) jeweils quer zur Bewegungsachse (2) erstreckte, magnetisch leitfähige Zähne (10; 50; 72) umfassen, sowie mit ersten Magnetmitteln (11) für die Bereitstellung erster, konstanter Magnetfelder an jeweils zugeordnete Zahngruppen (8) des Stators (100) und mit zweiten Magnetmitteln (9) für die Bereitstellung zweiter, einstellbarer magnetischer Felder an die Zahngruppen (8) des Stators (100), wobei die Zahnplatte (49; 70; 90) an einander entgegengesetzten Endbereichen längs der Bewegungsachse (2) in wenigstens einer Raumrichtung verjüngt ausgebildet ist und wobei der Stator (100) aus mehreren Statorsegmenten (1) aufgebaut ist, die jeweils einen Grundkörper (4) und wenigstens einen am Grundkörper (4) festgelegten Dipolstrang (3) umfassen, der wenigstens zwei zueinander phasenversetzte Zahngruppen (8) sowie erste und zweite den Zahngruppen (8) zugeordnete Magnetmittel (9, 11) umfasst.

## Beschreibung

Die Erfindung betrifft einen Lineardirektantrieb mit einem Stator und einem längs einer Bewegungsachse relativbeweglich am Stator angeordneten Läufer, wobei der Stator und der Läufer an einander gegenüberliegenden Oberflächen jeweils quer zur Bewegungsachse erstreckte, magnetisch leitfähige Zähne umfassen. Die Erfindung betrifft auch ein Transportsystem, bei dem Gebrauch von einem derartigen Lineardirektantrieb gemacht wird.

Aus der DE 10 2004 045 992 A1 ist eine elektrische Synchronmaschine bekannt, welche ein Primärteil und ein Sekundärteil aufweist, wobei das Primärteil ein erstes Mittel zur Erzeugung eines ersten magnetischen Feldes sowie zumindest ein weiteres Mittel zur Erzeugung eines weiteren magnetischen Feldes aufweist. Das Sekundärteil weist ein Mittel zur Führung des magnetischen Feldes auf. Das erste Mittel zur Erzeugung des ersten magnetischen Feldes ist derart zu den weiteren Mitteln zur Erzeugung des weiteren magnetischen Feldes angeordnet, dass eine Überlagerung des ersten magnetischen Feldes mit dem weiteren magnetischen Feld ermöglicht ist. Eine derartige elektrische Maschine, bei der wenigstens zwei unterschiedliche Mittel zur Erzeugung eines magnetischen Felds im Primärteil angeordnet sind, wird auch Hybridreluktanzmaschine genannt.

Die Aufgabe der Erfindung besteht darin, einen Lineardirektantrieb bereitzustellen, der in einfacher Weise an unterschiedliche Antriebsanforderungen, insbesondere eines Transportsystems, angepasst werden kann.

Die Aufgabe der Erfindung wird für einen Lineardirektantrieb der eingangs genannten Art mit den Merkmalen des Anspruchs 1 gelöst. Hierbei ist vorgesehen, dass die Zähne beim Läufer an einer Zahnplatte und längs der Bewegungsachse in gleicher Teilung angeordnet sind und beim Stator jeweils derart zu Zahngruppen zusammengefasst sind, dass die Zähne innerhalb einer jeweiligen Zahngruppe längs der Bewegungsachse äquidistant angeordnet sind und Zähne benachbarter Zahngruppen phasenversetzt zueinander angeordnet sind. Darüber hinaus sind erste Magnetmittel für die Bereitstellung erster, konstanter Magnetfelder an jeweils zugeordnete Zahngruppen des Stators und zweite Magnetmittel für die Bereitstellung zweiter, einstellbarer magnetischer Felder an die Zahngruppen des Stators vorgesehen. Die Zahnplatte des Läufers ist an einander entgegengesetzten Endbereichen längs der Bewegungsachse in wenigstens einer Raumrichtung verjüngt ausgebildet. Der Stator ist aus mehreren Statorsegmenten aufgebaut, die jeweils einen Grundkörper und wenigstens einen am Grundkörper festgelegten Dipolstrang umfassen, der wenigstens zwei zueinander phasenversetzte Zahngruppen sowie erste und zweite den Zahngruppen zugeordnete Magnetmittel umfasst.

Der Läufer ist vorzugsweise frei von Magnetmitteln, so dass er lediglich zur Umlenkung von Magnetfeldern eingesetzt wird, die von den unterschiedlichen Magnetmitteln des Stators bereitgestellt werden. Aufgrund der einheitlichen Zahnteilung für die Zähne des Läufers kann dieser kostengünstig hergestellt werden. Dies ist insbesondere dann von Vorteil, wenn eine Vielzahl von Läufern auf dem Lineardirektantrieb eingesetzt werden soll. Dies kann beispielsweise dann der Fall sein, wenn der Lineardirektantrieb in einer Produktionsumgebung zur Förderung von Werkstücken, insbesondere zwischen verschiedenen Bearbeitungsstationen, eingesetzt werden soll.

Durch den Phasenversatz, den die am Stator ausgebildeten Zahngruppen aufweisen, kann bei geeigneter Ansteuerung der ersten und zweiten Magnetmittel des Stators in einfacher Weise und ohne aufwendige Regelungstechnik eine resultierende Magnetkraft auf den Läufer ausgeübt werden, die eine Relativbewegung des Läufers gegenüber dem Stator hervorruft. Um gegebenenfalls vorliegende Inhomogenitäten der vom Stator bereitgestellten Magnetfelder abzuschwächen, die gegebenenfalls zu einer ruckartigen Bewegung des Läufers längs der Bewegungsachse führen könnten, ist die Zahnplatte des Läufers in wenigstens einer Raumrichtung verjüngt ausgeführt. Hierdurch kann bei einer linearen Relativbewegung zwischen Läufer und Stator eine lokal erhöhte Flussdichte des Magnetfelds, die ohne eine Verjüngung der Zahnplatte zu einer ruckartigen Bewegung des Läufers führen könnte, in ihrer Auswirkung auf den Läufer abgemildert werden, so dass eine zumindest nahezu gleichförmige Linearbewegung des Läufers hervorgerufen werden kann. Durch den modularen Aufbau des Stators aus mehreren Statorsegmenten kann eine einfache Anpassung des Lineardirektantriebs an unterschiedliche Antriebsanforderungen erreicht werden. Beispielsweise kann die Länge des Stators durch geeignete Auswahl und Aneinanderreihung von Statorsegmenten an die Anforderungen eines Transportsystems angepasst werden.

Vorteilhafte Weiterbildungen der Erfindung sind in den Unteransprüchen angeführt.

Zweckmäßig ist es, wenn beidseitig am Grundkörper längs der Bewegungsachse erstreckte, jeweils separat ausgebildete Seitenwangen, die Führungsmittel zur Längsführung eines Läufers aufweisen, festgelegt sind. Die Hauptfunktion der Seitenwangen besteht darin, eine Kraftübertragung zwischen dem Läufer und dem jeweiligen Statorsegment zu gewährleisten. Bei einer Beaufschlagung der Spulen im Statorsegment kommt es zu einer teilweisen Verdrängung des statischen Magnetfelds der ersten Magnetmittel aufgrund des von den zweiten Magnetmitteln bereitgestellten Magnetfelds. Hierbei bilden sich Zonen mit erhöhter magnetischer Flussdichte und Zonen mit reduzierter magnetischer Flussdichte aus, die jeweils auf den Läufer einwirken und zu einer resultierenden Magnetkraft auf den Läufer führen. Diese Magnetkraft weist sowohl eine Komponente parallel zur Bewegungsrichtung als auch eine Komponente senkrecht zur Bewegungsrichtung auf. Üblicherweise ist die Komponente senkrecht zur Bewegungsachse erheblich größer als die Komponente längs der Bewegungsachse. Zusätzlich wirkt üblicherweise die Gewichtskraft des Läufers und eines vom Läufer zu transportierenden Werkstücks ebenfalls in die gleiche Richtung wie die Magnetkraftkomponente senkrecht zur Bewegungsachse. Diese Kräfte werden vom Läufer auf die Seitenwangen und von dort auf den Grundkörper des Statorsegments übertragen, so dass ein geschlossener Kraftfluss vorliegt. Für eine vorteilhafte magnetische Effizienz der Hybridreluktanzmaschine wird üblicherweise ein möglichst kleiner und längs der Erstreckung des Statorsegments möglichst konstanter Luftspalt zwischen Läufer und Statorsegment angestrebt. Dieser Luftspalt kann für eine Luftlagerung genutzt werden, wodurch besonders hohe Genauigkeitsanforderungen an die einander gegenüberliegenden Oberflächen von Statorsegment und Läufer erfüllt werden müssen. Alternativ und kostengünstiger kann eine Gleit- oder Wälzlagerung des Läufers gegenüber dem Statorsegment vorgesehen werden, so dass ein konstanter Luftspalt primär der magnetischen Effizienz der Hybridreluktanzmaschine dient. Für eine Gleit- oder Wälzlagerung des Läufers gegenüber dem Statorsegment ist an jeder der Seitenwangen ein Führungsmittel zur Längsführung des Läufers vorgesehen, wobei das Führungsmittel eine vorzugsweise parallel zur Oberfläche des Statorsegments ausgebildete Führungsfläche aufweist. Auf dieser Führungsfläche gleitet der Läufer mit einer Gleitführung oder wälzt eine Wälzlagerung des Läufers ab.

Zweckmäßig ist es, wenn die Seitenwangen quer zur Bewegungsachse verstellbar am Grundkörper angeordnet sind und mit Befestigungsmitteln am Grundkörper festlegbar sind. Dadurch kann eine vorteilhafte Ausrichtung der an den Seitenwangen ausgebildeten Führungsflächen der Führungsmittel gegenüber der Oberfläche des Statorsegments erzielt werden. Die Befestigungsmittel, bei denen es sich beispielsweise um Schrauben handeln kann, ermöglichen eine Festlegung der Seitenwangen in derjenigen Position, in der eine vorteilhafte Ausrichtung und Beabstandung der Führungsflächen gegenüber der Oberfläche des Statorsegments vorliegt. Vorzugsweise sind an den Seitenwangen ebene Seitenflächen vorgesehen, die zur Anlage an ebenfalls ebenen Seitenflächen des Statorsegments vorgesehen sind, wobei die Seitenflächen des Statorsegments parallel zueinander und senkrecht zur Oberfläche des Statorsegments ausgerichtet sind. Dadurch ergibt sich bei der Festlegung der Seitenwangen unmittelbar eine vorteilhafte Ausrichtung gegenüber der Oberfläche des Statorsegments. Die Seitenwangen können vorzugsweise in einer Raumrichtung senkrecht zur Bewegungsachse und parallel zur Seitenfläche des Statorsegments verschoben werden, um eine korrekte Beabstandung und Ausrichtung der Führungsflächen von der Oberfläche des Statorsegments zu gewährleisten.

Bevorzugt weist die, insbesondere als Aluminium-Strangpressprofil ausgebildete, Seitenwange eine längs der Bewegungsachse erstreckte nutförmige Ausnehmung auf, in der ein langgestrecktes, vorzugsweise rohrförmiges, besonders bevorzugt hohlzylindrisches, insbesondere aus einem nichtmagnetischen Material hergestelltes, Führungsmittel zumindest über einen Teil seines Querschnitts aufgenommen und festgelegt ist. Vorzugsweise erstreckt sich die Seitenwange geradlinig längs der Bewegungsachse. Dabei weist die Seitenwange in jeder normal zur Bewegungsachse ausgerichteten Querschnittsebene stets den gleichen Querschnitt auf. Dies kann beispielsweise dadurch gewährleistet werden, dass die Seitenwange als Strangpressprofil ausgebildet ist. Die nutförmige Ausnehmung in der Seitenwange dient zur Aufnahme des Führungsmittels, das zur Gewährleisung eines möglichst konstanten Luftspalts zwischen Läufer und Statorsegment ebenfalls geradlinig und mit konstantem Querschnitt längs der Bewegungsachse erstreckt ist. Das Führungsmittel wird in die Ausnehmung eingelegt oder eingeschoben und ist dort kraft- und/oder form- und/oder stoffschlüssig aufgenommen. Vorzugsweise ist das Führungsmittel zylindrisch, insbesondere rohrförmig, ausgebildet und kann somit zur Abstützung von Reaktionskräften in einer oder in zwei Raumrichtungen genutzt werden. Die Kraftübertragung zwischen Führungsmittel und Läufer hängt bei einem zylindrischen Führungsmittel davon ab, wie das entsprechende Gleitstück oder der Wälzkörper am Läufer ausgebildet ist.

Bei einer Weiterbildung der Erfindung ist vorgesehen, dass das Führungsmittel von einer längs der Bewegungsachse erstreckten Ausnehmung durchsetzt ist und in der Ausnehmung ein Wegmesssystem, insbesondere ein magnetostriktives Wegmesssystem, zur Erfassung einer Läuferposition aufgenommen ist. Somit weist das Führungsmittel eine Doppelfunktion auf, es dient zur Lagerung des Läufers gegenüber dem Statorsegment und es bildet ein geschütztes Raumvolumen für das Wegmesssystem. Mit Hilfe des Wegmesssystems kann die Position des Läufers längs des Statorsegments ermittelt werden, beispielsweise um die Läuferpostition mittels einer Steuereinrichtung zu beeinflussen, insbesondere zu steuern oder zu regeln.

Bevorzugt umfasst der Läufer wenigstens eine drehbar gelagerte, die Führungsmittel bereichsweise umgreifende Führungsrolle sowie wenigstens eine drehbar gelagerte, auf den Führungsmitteln aufliegende Laufrolle. Die Aufgabe der Führungsrollen besteht darin, eine möglichst reibungsarme und präzise Linearführung des Läufers gegenüber dem Stator zu gewährleisten. Da der Wirkungsgrad des Lineardirektantriebs stark von dem Luftspalt zwischen den sich gegenüberliegenden Oberflächen von Stator und Läufer beeinflusst wird, ist es vorteilhaft, wenn die Führungsmittel und die korrespondierenden Führungs- bzw. Laufrollen sicherstellen, dass der Läufer und der Stator in einer Richtung normal zu den sich gegenüberliegenden Oberflächen längs der Bewegungsachse stets einen konstanten Abstand einnehmen. Zudem kommt der Führungsrolle die Aufgabe zu, parallel zu den sich gegenüberliegenden Oberflächen von Läufer und Stator ausgerichtete Kraftkomponenten innerer und äußerer Kräfte abzustützen, die auf den Läufer einwirken können. Hierzu umgreift die Führungsrolle das korrespondierende Führungsmittel zumindest bereichsweise, so dass zusätzlich zur Abstützung normal zu den sich gegenüberliegenden Oberflächen von Stator und Läufer auch eine Kraftübertragung in wenigstens eine weitere Raumrichtung gewährleistet ist. Bevorzug ist die Führungsrolle derart für einen Formschluss mit den Führungsmitteln ausgebildet, dass Kräfte in zwei in einander entgegengesetzte Raumrichtungen parallel zu den Oberflächen von Stator und Läufer und quer zur Bewegungsachse auf die Führungsmittel übertragen werden können. Bevorzugt sind dem Läufer zwei Längs der Bewegungsache voneinander beabstandete Führungsrollen für eine Kraftübertragung auf ein erstes Führungsmittel zugeordnet. Zur Gewährleistung einer statisch bestimmten Auflage des Läufers am Stator sind am Läufer zusätzlich eine oder mehrere Laufrollen vorgesehen, die lediglich für eine formschlüssige Kraftübertragung in genau einer Raumrichtung ausgebildet sind und die auf den zweiten Führungsmitteln aufliegen.

Zweckmäßig ist es, wenn die Zahnplatte des Läufers bereichsweise derart verjüngt ausgebildet ist, dass sie mit einer Oberfläche des Stators einen Luftspalt begrenzt, der sich längs der Bewegungsachse erweitert, insbesondere bereichsweise keilförmig ausgebildet ist. Hierbei schließt die Zahnplatte mit der gegenüberliegenden Oberfläche des Stators einen spitzen Winkel, insbesondere in einem Winkelbereich von 15 Grad plus/minus 5 Grad, ein. Bevorzugt ist die Verjüngung der Zahnplatte in einem Endbereich vorgesehen. Ausgehend von einem zentralen Abschnitt der Zahnplatte, der mit einem vorzugsweise parallel zum Stator ausgerichteten Oberflächenbereich ausgestattet ist, vergrößert sich der Luftspalt zwischen Läufer und Stator längs der Bewegungsachse bis zum Ende der Zahnplatte aufgrund eines schräg zur Oberfläche des Stators ausgerichteten Oberflächenbereichs der Zahnplatte, der insbesondere eben ausgebildet ist. Besonders bevorzugt ist die Zahnplatte spiegelsymmetrisch ausgeführt und ist an einander entgegengesetzten Endbereichen verjüngt ausgebildet. Durch die bereichsweise Verjüngung der Zahnplatte werden Inhomogenitäten der vom Stator abgegebenen Magnetfelder zumindest teilweise kompensiert, so dass ruckartige Bewegungen des Läufers nahezu vollständig vermieden werden können. Zweckmäßig ist es, wenn die Zahnplatte derart ausgebildet ist, dass der Luftspalt in einer normal zur Bewegungsachse ausgerichteten Querschnittsebene einen rechteckigen Querschnitt aufweist.

Bei einer vorteilhaften Weiterbildung der Erfindung ist die Zahnplatte des Läufers in einer parallel zur Oberfläche des Stators ausgerichteten Querschnittsebene bereichsweise verjüngt, insbesondere keilförmig verjüngt, ausgebildet. Diese Verjüngung die in gleicher Weise wie die alternativ oder ergänzend vorgesehene keilförmige Verjüngung des Luftspalts zur Vermeidung von Rasteffekten oder "Cogging" des Läufers bei einer Bewegung längs des Stators. Vorzugsweise verjüngt sich der Läufer ausgehend von einem zentralen Abschnitt hin zu einem endseitigen Bereich.

Bei einer Weiterbildung der Erfindung ist vorgesehen, dass der Dipolstrang wenigstens zwei quer zur Bewegungsachse ausgerichtete, beabstandet zueinander angeordnete Spulenträger umfasst, die an einer Oberseite mit den Zähnen der jeweiligen Zahngruppen versehen sind und die jeweils eine quer zur Bewegungsachse verlaufende schlitzförmige Ausnehmung zur Aufnahme eines Spulenabschnitts aufweisen. Die Aufgabe der Spulenträger besteht zum Einen in der mechanischen Fixierung der Spulenwindungen und zum Anderen in der effizienten Aus- und Einkopplung des von der Spule des Dipolstrangs bei Bestromung abgegebenen Magnetfelds. Bevorzugt entspricht die Breite der schlitzförmigen Ausnehmung im jeweiligen Spulenträger zumindest im Wesentlichen der Drahtstärke der Spule, wodurch ein zumindest nahezu vollständiges Umschließen des Spulenabschnitts durch den Spulenträger gewährleistet ist. Die Zahngruppen des Spulenträgers sind beidseitig der schlitzförmigen Ausnehmung angeordnet, die Zähne verlaufen parallel zur schlitzförmigen Ausnehmung. Die durch die schlitzförmige Ausnehmung getrennten und mit den jeweiligen Zahngruppen versehenen Oberflächenbereiche des Spulenträger werden auch als magnetische Arme bezeichnet, die zur Aus- und Einkopplung der in Flussdichte und Ausrichtung unterschiedlichen Magnetfelder zum bzw. vom Läufer ausgebildet sind. Die auf den unterschiedlichen magnetischen Armen ausgebildeten Zahngruppen weisen einen Phasenversatz auf.

Zweckmäßig ist es, wenn der Dipolstrang jeweils wenigstens vier benachbart längs der Bewegungsachse angeordnete Zahngruppen umfasst und dass einander benachbarte Zahngruppen des Dipolstrangs bezogen auf ihre Anordnung längs der Bewegungsachse jeweils um 180 Grad phasenversetzt angeordnet sind. Der Phasenversatz der benachbarten Zahngruppen zueinander ergibt sich durch eine entsprechende Beabstandung der Zahngruppen längs der Bewegungsachse. Hierdurch kann eine kompakte Aufbauweise des Dipolstrangs und eine effiziente Aus- und Einkopplung der örtlich unterschiedlichen Magnetfelder an den gegenüberliegend anzuordnenden Läufer erreicht werden. Während bei einer zweisträngigen Verschaltung der Dipolstränge ein Phasenversatz von 180 Grad zwischen den Zahngruppen des Dipolstrangs bevorzugt wird, ist bei einer dreisträngigen Verschaltung der Dipolstränge ein Phasenversatz von 120 Grad vorteilhaft, bei einer viersträngigen Verschaltung hingegen ein Phasenversatz von 90 Grad.

Vorteilhaft ist es, wenn die Zahngruppen eine einheitliche Zahnteilung aufweisen und/oder wenn Zahnlücken zwischen benachbarten Zähnen in der jeweiligen Zahngruppe mit einer Zahnlückenteilung ausgebildet sind, die der Zahnteilung der Zähne der Zahngruppe entspricht. Hierdurch werden unerwünschte Inhomogenitäten in der Verteilung der von den Dipolsträngen abgegebenen Magnetfelder zumindest weitestgehend vermieden. Dies ermöglicht die Bereitstellung von Magnetfeldern, durch die eine kontinuierliche und zumindest nahezu ruckfreie Bewegung des Läufers längs der Bewegungsachse ermöglicht wird.

Bevorzugt sind einander gegenüberliegende Zahnflanken von am Spulenträger ausgebildeten, benachbart angeordneten Zahngruppen des Dipolstrangs und/oder von Zahngruppen benachbart angeordneter Spulenträger des Dipolstrangs um ein ganzzahliges Vielfaches der Zahnteilung voneinander beabstandet, um den Phasenversatz von 180 Grad zu gewährleisten. Dafür ist bei identischer Zahnteilung der beiden benachbarten Zahngruppen und bei gleicher Teilung von Zähnen und Zahnlücken ein Versatz zwischen den beiderseits der schlitzförmigen Ausnehmung angeordneten Zahngruppen um eine Zahnteilung oder ein ganzzahliges Vielfaches einer Zahnteilung jeweils zuzüglich einer halben Zahnteilung vorzusehen. Dementsprechend sind die gegenüberliegenden Zahnflanken um ein ganzzahliges Vielfaches der Zahnteilung zueinander beabstandet.

Zweckmäßig ist es, wenn einander gegenüberliegende Zahnflanken einander benachbarter Zahngruppen benachbart angeordneter Dipolstränge um ein ganzzahliges Vielfaches der Zahnteilung zuzüglich oder abzüglich einer viertel Zahnteilung voneinander beabstandet sind, um einen Phasenversatz von 90 Grad zu gewährleisten. Für eine gleichmäßige Linearbewegung des Läufers längs des Statorsegments ist es bei einem zweisträngigen Aufbau des Statorsegments vorteilhaft, wenn die einander benachbart angeordneten Zahngruppen benachbarter Dipolstränge um 90 oder 270 Grad zueinander phasenversetzt angeordnet sind. Bei einem zweisträngigen Aufbau des Statorsegments ist jeder zweite Dipolstrang elektrisch mit der gleichen Spannungsquelle gekoppelt.

Bei einem dreisträngigen Aufbau des Statorsegments ist jeder dritte Dipolstrang elektrisch mit der gleichen Spannungsquelle gekoppelt. Hier ist zwischen den Zahngruppen der einander benachbarten Dipolstränge ein Phasenversatz von 60 oder 180 Grad einzuhalten, während die Zahngruppen eines Dipolstrangs einen Phasenversatz von 120 Grad aufweisen können.

Zweckmäßig ist es, wenn wenigstens der Stator wenigstens zwei, vorzugsweise jeweils gleichartig geformte, Statorsegmenten umfasst, wobei normal zur Bewegungsachse ausgerichtete Stirnflächen der Grundkörper benachbart angeordneter Statorsegmente jeweils einander gegenüberliegend angeordnet sind und dass einander unmittelbar gegenüberliegende Zähne der aneinander aufgereihten Statorsegmente einen Phasenversatz nach der Gleichung p = 180/s aufweisen, wobei s der Anzahl der elektrisch unterschiedlich angeschlossenen Dipolstränge entspricht. Eine derartige Statoranordnung kann durch den modularen Aufbau unter Ausnutzung von gleichlangen oder unterschiedlich langen Statorsegmenten in vorteilhafter Weise an die Erfordernisse eines Transportsystems angepasst werden, mit dem beispielsweise auf Läufern angeordnete Werkstücke in einer linearen Bewegung zu verschiedenen Bearbeitungsstation gefördert werden können. Bei zweisträngigen Statorsegmenten (s=2), bei denen die Dipolstränge jeweils abwechselnd an unterschiedliche Spannungsquellen angeschlossen werden, beträgt somit der Phasenversatz zwischen den Zähnen benachbart angeordneter Statorsegmente 90 Grad. Bei dreisträngigen Statorsegmenten (s=3), bei denen jeweils jeder dritte Dipolstrang mit der gleichen Spannungsquelle verbunden ist, beträgt der Phasenversatz zwischen den Zähnen benachbart angeordneter Statorsegmente 60 Grad.

Vorteilhaft ist es, wenn jedes der Statorsegmente den gleichen Aufbau aufweist. Die Anordnung der Dipolstränge und der zugehörigen Zähne innerhalb der jeweiligen Statorsegmente ist vorzugsweise nicht symmetrisch ausgebildet. Beispielsweise weisen die gleichartig ausgebildeten Statorsegmente an einem ersten Ende (bei exemplarisch zweisträngiger Ausführung) einen Abstand zwischen der ersten Stirnfläche und der ersten Zahnflanke auf, der einer Zahnteilung entspricht. Hingegen ist an einem zweiten Ende des Statorsegments ein Abstand zwischen der letzten Zahnflanke und der zweiten Stirnfläche derart gewählt, dass er 75 Prozent der Zahnteilung entspricht.

Zweckmäßig ist es, wenn der Spulenträger aus quer zur Bewegungsachse geschichtet angeordneten, insbesondere stoffschlüssig miteinander verbundenen, Blechelementen aufgebaut ist. Der Aufbau des Spulenträgers aus Blechelementen wird zur Vermeidung von Wirbelströmen bei Bestromung der Spule vorgesehen. Die Blechelemente können beispielsweise durch eine zwischen benachbarten Spulenträgern angeordnete Permanentmagnetanordnung zusammengehalten werden. Vorzugsweise werden die Blechelemente durch eine aushärtbare Vergußmasse, die zur Festlegung der Dipolstränge am Grundkörper eingesetzt wird, zueinander fixiert. Bei einer vorteilhaften Weiterbildung der Erfindung werden die die Blechelemente mit einer oder mehreren, vorzugsweise quer zur Bewegungsachse ausgerichteten, Schweißnähten stoffschlüssig miteinander verbunden.

Als Phasenversatz wird bei einer Hybridreluktanzmaschine eine Beabstandung zwischen benachbarten Zahngruppen des Statorsegments verstanden, die derart gewählt ist, dass ein Teilungsraster der Zähne der nachfolgenden Zahngruppe nicht in Überdeckung mit dem Teilungsraster der Zähne der vorausgehenden Zahngruppen angeordnet ist. Exemplarisch können die benachbarten Zahngruppen jeweils die gleiche Zahnteilung aufweisen. Die Zähne der nachfolgenden Zahngruppe sind trotz der gleichen Zahnteilung nicht im Teilungsraster der vorausgehenden Zahngruppe angeordnet, vielmehr entspricht ein Abstand zwischen gleichsinnig ausgerichteten Zahnflanken der Zähne der beiden benachbarten Zahngruppen nicht einem ganzzahligen Vielfachen (1 bis n) der Teilung. Hierdurch wird bei Beaufschlagung der beiden benachbarten Zahngruppen mit den Magnetfeldern der ersten und zweiten Magnetmittel für einen dem Statorsegment gegenüberliegend angeordneten Läufer, der Zähne in gleicher Teilung aufweist und der vorzugsweise frei von Magnetmitteln ist und lediglich als Magnetfeldleiter dient, eine längs der Bewegungsachse wirkende Vortriebskraft bewirkt. Diese Vortriebskraft kann eine Relativbewegung zwischen Statorsegment und Läufer bewirken. Durch den Phasenversatz der Zahngruppen innerhalb eines Dipolstrangs kann der Läufer besonders einfach aufgebaut werden und das Statorsegment weist ebenfalls einen einfachen Aufbau auf.

Bei einer Weiterbildung der Erfindung ist vorgesehen, dass die ersten Magnetmittel als permanentmagnetische Leiste oder Anordnung von Permanentmagneten ausgebildet und zwischen den zwei benachbarten Spulenträgern des Dipolstrangs angeordnet sind, wobei die ersten Magnetmittel an einander gegenüberliegenden Oberflächen der Spulenträger anliegen, insbesondere magnetisch anhaften. Die Funktionsweise eines Hybridreluktanzmotors beruht unter Anderem darauf, dass ein erstes Magnetfeld, welches die Zahngruppen des Dipolstrangs durchsetzt, mit Hilfe eines zweiten Magnetfelds zumindest teilweise verdrängt wird, um die gewünschten Antriebskräfte auf das Läufersegment bereitstellen zu können. Vorzugsweise wird das erste Magnetfeld durch einen oder mehrere Permanentmagnete bereitgestellt, die zwischen zwei benachbart angeordneten Spulenträgern eingesetzt werden. Der oder die Permanentmagnete weisen exemplarisch eine quaderförmige Hüllkurve auf und erstrecken sich zumindest nahezu über die gesamte Breite der Spulenträger. Besonders bevorzugt ist die Dicke oder lineare Erstreckung der Permanentmagnete längs der Bewegungsachse derart gewählt, dass die Permanentmagnete auch den exakten Abstand zwischen den beiden Spulenträgern des entsprechenden Dipolstrangs definieren.

Bevorzugt ist bei einem zweisträngig verschalteten Statorsegment ein Abstand zwischen einer normal zur Bewegungsachse ausgerichteten ersten Stirnfläche des Grundkörpers und einer benachbarten ersten Zahnflanke sowie ein Abstand zwischen einer normal zur Bewegungsachse ausgerichteten zweiten Stirnfläche des Grundkörpers und einer benachbarten letzten Zahnflanke derart gewählt ist, dass bei einer Aneinanderreihung gleichartig ausgebildeter Statorsegmente ein 90-Grad Phasenversatz zwischen dem letzten Zahn des vorausgehenden Statorsegments und dem ersten Zahn des nachfolgenden Statorsegments gewährleistet ist. Dadurch wird bei linearer Kopplung zweier oder mehrerer zweisträngig ausgebildeter Statorsegmente, bei der sich jeweils die zweite Stirnfläche des vorausgehenden Statorsegments und die erste Stirnfläche des nachfolgenden Statorsegments gegenüberliegen, zwischen den jeweils benachbarten Statorsegmenten ein Abstand eingestellt, der exemplarisch einem Phasenversatz von 90 Grad zwischen den Zahngruppen der jeweils endseitig und benachbart an gegenüberliegenden Statorsegmenten angeordneten Dipolstränge entspricht. Exemplarisch sind die einander gegenüberliegenden Zahnflanken der benachbarten Statorsegmente um die 1,75-fache Zahnteilung voneinander beabstandet, so dass gleichsinnig ausgerichtete Zahnflanken dieser Zähne um das 2.25-fache der Zahnteilung voneinander beabstandet sind, was bei zweisträngiger Verschaltung dem gewünschten Phasenversatz von 90 Grad entspricht. Bei einem dreisträngig verschalteten Statorsegment ist der Abstand zwischen der letzten Zahnflanke der letzten Zahngruppe und der Stirnfläche derart gewählt, dass ein Phasenversatz von 60 Grad zwischen den benachbarten Zähnen der aneinandergereihten Statorsegmente vorliegt.

In weiterer Ausgestaltung der Erfindung sind am Grundkörper mehrere Ausnehmungen zur Aufnahme von Dipolsträngen vorgesehen und zwischen benachbarten Ausnehmungen sind, insbesondere einstückig angeformte, Stege ausgebildet, um eine Beabstandung benachbarter Dipolstränge gemäß der Zahnteilung zu gewährleisten. Die Ausnehmungen am Grundkörper sind vorzugsweise alle in die gleiche Oberfläche des Grundkörpers eingebracht, beispielsweise durch ein spanendes Fertigungsverfahren wie Fräsen. Die Aufgabe der Ausnehmungen besteht darin, die Dipolstränge aufzunehmen und eine vorgebebene Anordnung der Dipolstränge sicherzustellen. Bevorzugt sind zur Sicherstellung der gewünschten Beabstandung der benachbarten Dipolstränge Stege zwischen den Ausnehmungen angeordnet, deren Dicke den Phasenversatz zwischen den benachbarten Zahngruppen bestimmt.

Die der Erfindung zugrundeliegende Aufgabe wird auch durch ein Transportsystem mit einem Lineardirektantrieb nach einem der vorhergehenden Ansprüche gelöst, wobei der Stator mehrere längs der Bewegungsachse aneinander gereihte Statorsegmente umfasst, sowie mit einer Steuereinrichtung zur wahlweisen Ansteuerung der Statorsegmente sowie mit Fördermitteln zum Ein-und/oder Ausschleifen von Läufern auf den Stator und/oder vom Stator, die insbesondere als endlos umlaufende Gliederketten ausgebildet sind. Das Transportsystem macht Gebrauch von dem erfindungsgemäßen Lineardirektantrieb und kann dadurch in einfacher Weise an unterschiedliche Transportaufgaben angepasst werden. Hierbei ist die Unterteilung des Stators in mehrere Statorsegmente hilfreich, da dadurch eine Anpassung der Länge des Stators an die Transportstrecke in einfacher Weise durch Auswahl der geeigneten Statorsegmente erfolgen kann. Vorzugsweise wird jedes der Statorsegmente von einer separat ausgebildeten Steuereinrichtung angesteuert, so dass die Geschwindigkeit der Läufer auf den jeweiligen Statorsegmenten individuell eingestellt werden kann. Alternativ können auch mehrere Statorsegmente oder der gesamte Stator von einer gemeinsamen Steuereinrichtung angesteuert werden. Da aufgrund der Ausführung des Lineardirektantriebs als Hybridreluktanzmotor nur eine Steuerung der Statorsegmente erforderlich ist, um eine zuverlässige und robuste Bewegung der Läufer sicherzustellen, sind die Kosten für das Transportsystem verglichen mit elektrodynamischen Antriebssystemen vorteilhaft. Zudem können die Läufer auf den Lineardirektantrieb eingeschleift oder von diesem wieder ausgeschleift werden, ohne dass hierzu aufwendige Maßnahmen hinsichtlich einer Berücksichtigung der einzelnen Läufer durch die Steuerungseinrichtung notwendig wären. Besonders bevorzugt werden die Läufer, die beispielsweise als Werkstückträger dienen, von einer Fördereinrichtung, beispielsweise einer endlos umlaufenden Gliederkette, auf den Lineardirektantrieb eingeschleift und können dort mit hoher Präzision an eine oder mehrere Arbeitsstationen längs der Bewegungsachse, an denen eine Bearbeitung des auf dem Läufer aufgenommenen Werkstücks erfolgt, transportiert werden.

Eine vorteilhafte Ausführungsform der Erfindung ist in der Zeichnung dargestellt. Dabei zeigt:
- Figur 1: eine Draufsicht auf ein Statorsegment mit mehreren jeweils benachbart angeordneten Dipolsträngen,
- Figur 2: eine seitliche Schnittdarstellung des Statorsegments gemäß Figur 1,
- Figur 3: eine Detaildarstellung aus der Figur 2,
- Figur 4: eine Vorderansicht des mit Seitenwangen und Führungsmitteln ausgerüsteten Statorsegments
- Figur 5: eine perspektivische Darstellung einer ersten Ausführungsform einer Zahnplatte für einen Läufer,
- Figur 6: eine Seitenansicht der Zahnplatte gemäß Figur 5,
- Figur 7: eine perspektivische Darstellung einer zweiten Ausführungsform einer Zahnplatte für einen Läufer,
- Figur 8: eine Seitenansicht der Zahnplatte gemäß Figur 7,
- Figur 9: eine perspektivische Darstellung einer dritten Ausführungsform einer Zahnplatte für einen Läufer und
- Figur 10: eine schematische Darstellung eines Transportsystems.

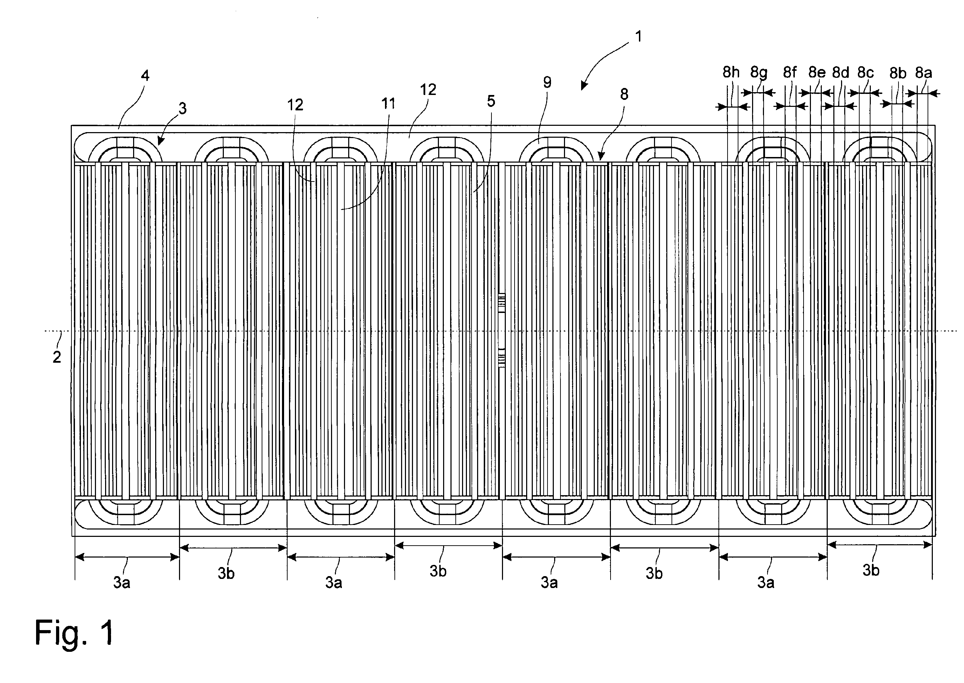

In der Figur 1 ist ein Statorsegment 1 für eine nicht näher dargestellte Statoranordnung gezeigt. Das Statorsegment 1 umfasst mehrere längs einer Bewegungsachse 2 aneinander gereihte Dipolstränge 3, die exemplarisch in zweisträngiger elektrischer Verschaltung angeordnet sind, weshalb die einzelnen Dipolstränge mit 3a und 3b bezeichnet sind. Bei der zweisträngigen Beschaltung der Dipolstränge 3 wird also jeder zweite Dipolstrang 3a / 3b mit der jeweils gleichen, nicht dargestellten elektrischen Quelle verbunden, so dass insgesamt zwei unabhängig voneinander ansteuerbare Dipolstranggruppen vorliegen. Die Bewegungsachse 2 repräsentiert den linearen Freiheitsgrad eines nicht dargestellten Läufers, auf den mittels des Statorsegments 1 bei entsprechender Bestromung der Dipolstränge 3 eine Vortriebskraft aufgeprägt werden kann, so dass der Läufer sich längs der Bewegungsachse relativ zum Statorsegment 1 bewegen kann.

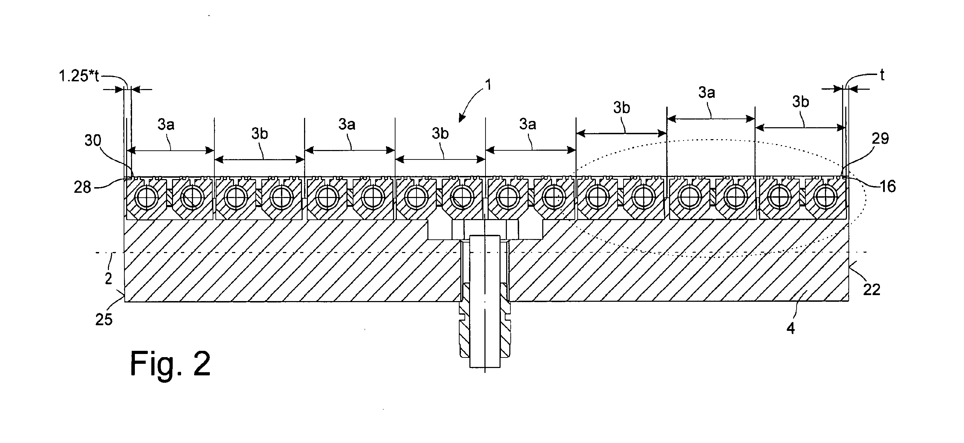

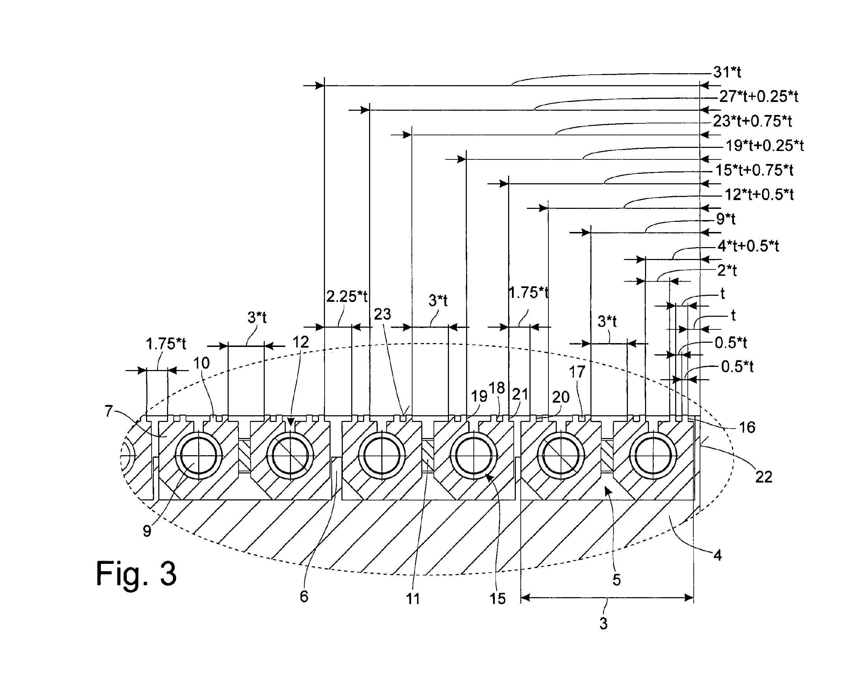

Das Statorsegment 1 umfasst neben den Dipolsträngen 3 einen exemplarisch einstückig ausgebildeten Grundkörper 4, der vorzugsweise aus einem magnetisch und elektrisch leitfähigen Material, beispielsweise Metall, insbesondere Aluminium hergestellt ist. Die Dipolstränge 3 sind in Ausnehmungen 5 aufgenommen, die in den Figuren 2 und 3 näher dargestellt sind. Die Dipolstränge 3 sind in den Ausnehmungen 5 mittels einer nicht näher dargestellten Vergußmasse stoffschlüssig festgelegt, die beispielsweise als aushärtbare Kunststoffmasse ausgebildet sein kann. Zur korrekten Beabstandung der Dipolstränge 3 längs der Bewegungsachse sind am Grundkörper 4 Stege 6 ausgebildet, deren Haupterstreckungsrichtung quer zur Bewegungsachse 2 verläuft. Vorzugsweise sind die Stege 6 einstückig mit dem Grundkörper 4 ausgebildet. Hohe Anforderungen an die Maßhaltigkeit der Stege 6 und/oder der Dipolstränge 3 sind zumindest dann nicht erforderlich, wenn die nachstehend näher beschriebenen Zahngruppen 8 der Dipolstränge 3 in einem Fertigungsschritt nach der Festlegung der Dipolstränge 3 am Grundkörper 4 hergestellt werden.

Die Dipolstränge 3 sind als eigenständige Baugruppen ausgebildet und können abseits des Grundkörpers 4 vormontiert werden. Der Dipolstrang 3 umfasst jeweils zwei parallel zueinander ausgerichtete Spulenträger 7, deren Haupterstreckungsrichtung quer zur Bewegungsachse 2 verläuft. Der Spulenträger 7 kann exemplarisch aus Blechelementen aufgebaut sein, die insbesondere als Stanzteile ausgebildet sind und die eine Geometrie aufweisen, die der Schnittdarstellung der Spulenträger 7 in den Figuren 2 und 3 entspricht. Durch Aneinanderreihen der Blechelemente quer zur Bewegungsachse 2 wird der jeweilige Spulenträger 7 gebildet. An einer in der Figur 1 sichtbaren Oberseite der Spulenträger 7 sind jeweils Zahngruppen 8 ausgebildet, die ihrerseits Zähne 10 umfassen, deren größte Oberflächen normal zur Bewegungsachse 2 ausgerichtet sind.

Zwischen den jeweils zwei Spulenträgern 7 eines Dipolstrangs 3 ist jeweils eine Permanentmagnetanordnung 11 angeordnet. Vorzugsweise liegen normal zur Bewegungsachse 2 ausgerichtete größte Oberflächen der Permanentmagnetanordnung 11 flächig an gegenüberliegenden Seitenflächen der jeweiligen Spulenträger 7 an, wie dies beispielsweise aus der Figur 3 hervorgeht. Die Permanentmagnetanordnung 11 kann als einstückige Leiste oder als Gruppe von quaderförmigen Permanentmagneten ausgebildet sein. Vorzugsweise sind die einander gegenüberliegenden Seitenflächen der Spulenträger 7 und die an diesen Seitenflächen anliegende Permanentmagnetanordnung 11 derart ausgebildet, dass hierdurch eine korrekte Beabstandung der Spulenträger 7 gewährleistet ist. Diese Beabstandung muss zumindest dann keine besonders hohen Anforderungen an die Maßhaltigkeit erfüllen, wenn die Zähne 10 der Zahngruppen 8 an den Spulenträgern 7 erst nach Montage und Festlegung der Dipolstränge 3 an den Grundkörper 4, beispielsweise durch einen Fräsvorgang, strukturiert werden.

In den Spulenträgern 7 ist jeweils eine quer zur Bewegungsachse 2 verlaufende, schlitzförmige Ausnehmung 12 vorgesehen, durch die nicht näher dargestellte Drahtwindungen einer Spule 9 in eine parallel zur Ausnehmung 12 verlaufende, exemplarisch mit kreisförmigem Querschnitt ausgebildete, Spulenkammer 15 im Inneren des Spulenträgers 7 eingelegt werden können. Die Spule 9 koppelt jeweils zwei Spulenträger 7 zu einem Dipolstrang 3 und verfügt über nicht näher dargestellte Versorgungsleitungen, die zum Anschluss an eine ebenfalls nicht dargestellte Steuereinrichtung vorgesehen sind. Die Steuereinrichtung stellt die elektrische Energie zur Beaufschlagung der jeweiligen Spulen 9 zur Verfügung, um die gewünschten Magnetkräfte zur linearen Bewegung des nicht dargestellten Läufers bereitzustellen.

Die Zähne 10 an den Spulenträgern 7 sind exemplarisch nach der Montage der Dipolstränge 3 an den Grundkörper 4, insbesondere durch einen Fräsvorgang, strukturiert. Dabei sind die Zähne 10 an den jeweiligen Spulenträgern 7 als Zahngruppen 8 ausgebildet. Innerhalb der Zahngruppen 8 sind die Zähne 10 jeweils mit konstanter Zahnteilung t, also einem für alle Zähne 10 der jeweiligen Zahngruppe 8 konstanten Abstand von zwei jeweils in gleicher Richtung ausgerichteten Zahnflanken 16 ausgebildet. An einem Spulenträger 7 ausgebildete, benachbarte Zahngruppen 8 sind jeweils um 180 Grad phasenversetzt angeordnet. Dies wird dadurch erreicht, dass die einander zugewandten Zahnflanken 18, 19 der gegenüberliegenden Zähne 10 der beiden Zahngruppen 8 um ein ganzzahliges Vielfaches s der Zahnteilung t zueinander versetzt sind (s = n*t mit n = 1, 2, 3, ...). Zahngruppen 8 benachbarter Spulenträger 7 eines Dipolstrangs 3 sind bei dem exemplarisch zweisträngig geschalteten Statorsegment 1 in gleicher Weise um 180 Grad phasenversetzt. Die entsprechenden Zahngruppen eines Dipolstrangs 3 sind in der Figur 1 exemplarisch mit 8a bis 8d bezeichnet.

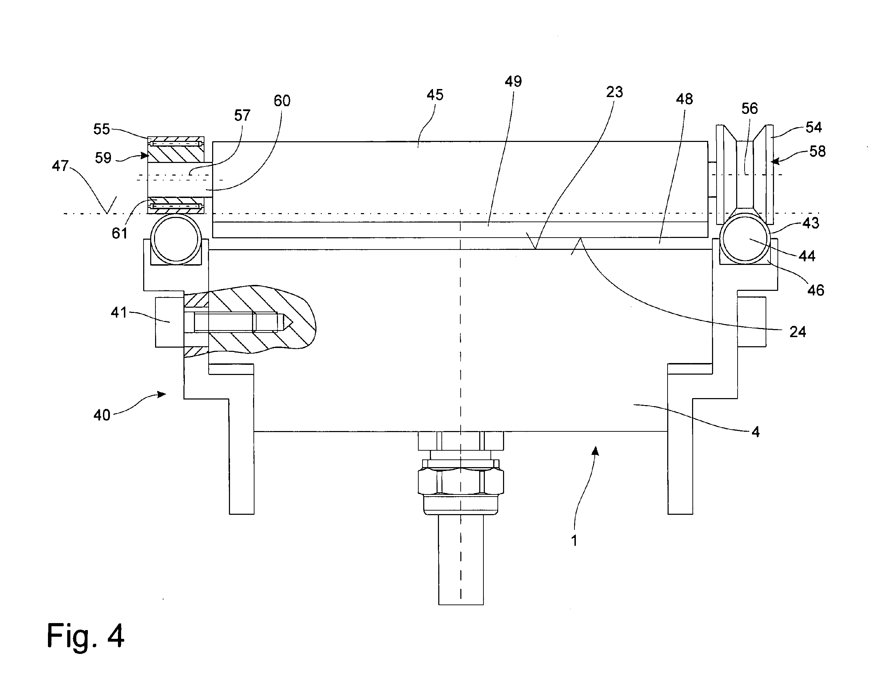

Zwischen zwei benachbarten Dipolsträngen 3 sind die Zähne hingegen um 90 oder 270 Grad phasenversetzt, was dadurch erreicht wird, dass die einander zugewandten Zahnflanken 20, 21 der gegenüberliegenden Zähne 10 der beiden Zahngruppen 8 mit einem Abstand u voneinander beabstandet sind, der ein ganzzahliges Vielfaches der Zahnteilung t abzüglich oder zuzüglich einer viertel Zahnteilung beträgt (u = n*t +/- 0,25*t mit n = 1, 2, 3, ...), wie dies in der Figur 3 dargestellt ist. Um eine Aneinanderreihung mehrerer Statorsegmente 1 längs der Bewegungsachse 2 zu einer nicht dargestellten Statoranordnung zu erleichtern, sind die jeweils ersten und letzten Dipolstränge 3 derart an dem Grundkörper 4 angeordnet, dass einander gegenüberliegende Zähne 29, 30 benachbart anzuordnender Statorsegmente 1 bei dem exemplarisch beschriebenen zweisträngig ausgebildeten Statorsegment 1 hinsichtlich der einander gegenüberliegenden Zahnflanken 16, 28 derart beabstandet sind, dass die einander gegenüberliegenden Zähne 29, 30 der beiden Statorsegmente 1 einen Phasenversatz von 90 Grad zueinander aufweisen. Dies wird exemplarisch wie in der Figur 2 dargestellt dadurch erreicht, dass ein Abstand der ersten Zahnflanke 16 zur einer ersten Stirnfläche 22 mit der Zahnteilung t gewählt wird und ein Abstand einer letzten Zahnflanke 28 zu einer zweiten Stirnfläche 25 mit 1,25*t gewählt wird. Dadurch ergibt sich bei Aneinanderreihung von gleichartig gestalteten Statorsegmenten 1 ein Abstand von 2,25*t zwischen den sich gegenüberliegenden Zahnflanken 16 und 28 und somit ein Abstand von 2,75*t zwischen gleichsinnigen Zahnflanken des letzten Zahns 30 eines nicht dargestellten vorhergehenden Statorsegments 1 und des ersten Zahns 29 eines daran angereihten, ebenfalls nicht dargestellten nachfolgenden Statorsegments 1. Hierdurch ist der bei einer zweisträngigen Verschaltung gewünschte Phasenversatz von 90 Grad zwischen den benachbarten Statorsegmenten 1 sichergestellt.Bei einer nicht dargestellten dreisträngigen Ausführungsform des Statorsegments sind die Zähne längs der Bewegungsachse 2 aneinandergereihter Statorsegmente mit einem Phasenversatz von 60 Grad zueinander angeordnet. Bei viersträngigen Statorsegmenten ist ein Phasenversatz von 45 Grad vorzusehen, bei fünfsträngigen Statorsegmenten ein Phasenversatz von 36 Grad. In der Figur 4 ist das Statorsegment 1 in einer Vorderansicht dargestellt und beidseitig mit Seitenwangen 40 ergänzt. Die Seitenwangen 40 sind exemplarisch als Aluminium-Strangpressteile ausgebildet und weisen den in der Figur 4 erkennbaren Querschnitt über ihre gesamte Erstreckung längs der Bewegungsachse 2, die normal zur Darstellungsebene der Figur 4 ausgerichtet ist, auf. Die Seitenwangen 40 sind jeweils mit Befestigungsmitteln 41 an dem Grundkörper 4 festgelegt, exemplarisch sind als Befestigungsmittel Zylinderschrauben vorgesehen. In den Seitenwangen 40 sind jeweils Ausnehmungen 42 ausgebildet, die für eine Durchführung des jeweiligen Befestigungsmittels 41 dienen und die zumindest längs einer Achse normal zur Oberfläche 23 des Statorsegments 1 eine größere Ausdehnung als der bolzenförmige Abschnitt des Befestigungsmittels aufweisen, an dem exemplarisch ein Gewinde zum Einschrauben in den Grundkörper 4 ausgebildet ist. Hierdurch wird eine Verschiebbarkeit der Seitenwangen 40 relativ zum Grundkörper 4 gewährleistet, die für die Ausrichtung der Seitenwangen 40 gegenüber der Oberfläche 23 vorteilhaft ist.

An den Seitenwangen 40 sind jeweils Führungsmittel 43 angebracht, die exemplarisch zylinderhülsenförmig ausgebildet sind. In dem vom jeweiligen Führungsmittel 43 umschlossenen Raumvolumen kann ein schematisch dargestelltes Wegmesssystem 44 angeordnet sein, das zur Ermittlung einer Position eines schematisch angedeuteten Läufers 45 gegenüber dem Statorsegment 1 ausgebildet ist. Die Führungsmittel 43 sind in Nuten 46 der Seitenwangen 40 aufgenommen und dort in nicht näher dargestellter Weise kraft- und/oder form- und/oder stoffschlüssig festgelegt. Eine Berührebene 47, die die beiden parallel zueinander ausgerichteten Führungsmittel 43 tangiert, ist parallel zur exemplarisch eben ausgeführten Oberfläche 23 des Statorsegments 1 ausgerichtet. Hierdurch ist über die gesamte Erstreckung des Statorsegments 1 längs der Bewegungsachse 2 ein konstanter Luftspalt 48 zwischen der Oberfläche 23 des Statorsegments 1 und dem Läufer 45 gewährleistet.

Um dies zu gewährleisten, wird bei der Montage der Seitenwangen 40 ein Bezug zwischen der Berührebene 47 und der Oberfläche 23 mittels einer ebenen Bezugsfläche, beispielsweise einer Oberfläche einer ebenen Messplatte, hergestellt. Um die gewünschte Beabstandung von Berührebene 47 und Oberfläche 23 zu gewährleisten, können zwischen die Bezugsfläche und die Oberfläche 23 des Statorsegments 1 geeignete Abstandskörper, beispielsweise Endmaße oder Zylinderstifte, angeordnet werden. Erst wenn die Führungsmittel 43 und die Oberfläche 23 unmittelbar bzw. aufgrund der Abstandskörper mittelbar auf der Bezugsfläche aufliegen, werden die Befestigungsmittel 41 angezogen und die Position der Seitenwangen 40 gegenüber dem Grundkörper 4 fixiert.

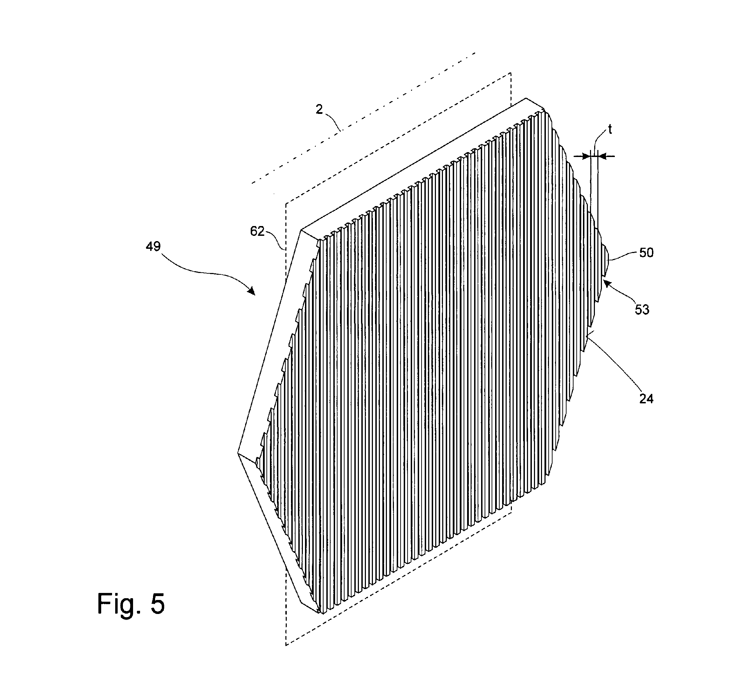

Der Läufer 45 umfasst an einer dem Statorsegment 1 zugewandten Unterseite eine Zahnplatte 49, die in unterschiedlicher Weise ausgebildet sein kann, wie dies anhand der Ausführungsbeispiele in den Figuren 5 bis 9 ersichtlich wird. Der Läufer 45 ist hinsichtlich seiner Funktion innerhalb des aus Statorsegmenten 1, dem wenigstens einen Läufer 45 sowie einer nicht näher dargestellten Steuereinrichtung gebildeten Lineardirektantriebs frei von Magnetmitteln. Vielmehr dient die am Läufer 45 ausgebildete Zahnplatte zur Leitung der magnetischen Felder, die von den entsprechenden Statorsegmenten 1 abgegeben werden. Vorteilhaft ist es, wenn eine von der Zahnplatte 49 bestimmte Oberfläche 24, die als Berührebene auf die Zahnspitzen der Zähne 50 der Zahnplatte 49 angesehen werden kann, parallel zur Oberfläche 23 des Statorsegments 1 ausgerichtet ist. Besonders vorteilhaft ist es, wenn der zwischen den beiden Oberflächen 23, 24 ausgebildete Luftspalt 48 unabhängig von der Position des Läufers 45 längs des Statorsegments 1 stets den gleichen, aus der Figur 4 erkennbaren Querschnitt hat und die Zahnplatte 49 somit stets den gleichen Abstand zur Oberfläche 23 des Statorsegments 1 aufweist.

Um einen stets gleichbleibenden Abstand zwischen Zahnplatte 49 und Oberfläche 23 zu gewährleisten, sind am Läufer 45 seitlich angebrachte Führungsrollen 54 und Laufrollen 55 vorgesehen. Die Führungsrollen 54 und Laufrollen 55 sind drehbar am Läufer 45 gelagert, wobei Drehachsen 56, 57 der Führungsrollen 54 und der Laufrollen 55 quer zur Bewegungsachse 2 und parallel zu den Oberflächen 23, 24 ausgerichtet sind. Die Führungsrollen 54 sind exemplarisch für eine Kraftübertragung in insgesamt drei Raumrichtungen ausgelegt. Sie ermöglichen eine Kraftübertragung in einer Raumrichtung senkrecht zur Oberfläche 23, wodurch bei einer Anordnung von Läufer 45 und Statorsegment 1, wie sie in der Figur 4 dargestellt ist, die Gewichtskraft des Läufers 45 auf das Statorsegment 1 übertragen werden kann. Zudem können Magnetkräfte abgestützt werden, die bei Bestromung der Dipolstränge 3 im Statorsegment 1 den Läufer 45 in Richtung des Statorsegments 1 anziehen. Darüber hinaus können aufgrund des spulenartigen Querschnitts der Führungsrolle 54, der zu einem formschlüssigen Umgreifen des Führungsmittels 43 in zwei einander entgegengesetzte und parallel zu den Drehachsen 56, 57 ausgerichtete Raumrichtungen führt, auch Kräfte längs der Drehachsen 56, 57 abgestützt werden. Für eine Einstellung des Luftspalts 48 zwischen dem Läufer 45 und dem Statorsegment 1 kann der Abstand der Drehachsen 56, 57 mittels zugeordneter Exzentereinrichtungen 58, 59 eingestellt werden. Exemplarisch ist die Exzentereinrichtung 59 der Laufrolle 55 zwischen einer am Läufer 45 angeordneten Achse 60 und der Laufrolle 55 angeordnet und umfasst eine Exzenterhülse 61, die relativ zur Achse 60 verdreht werden kann, wodurch sich der Abstand der effektiven Drehachse 57 der Laufrolle 55 gegenüber den Führungsmitteln 43 einstellen lässt.

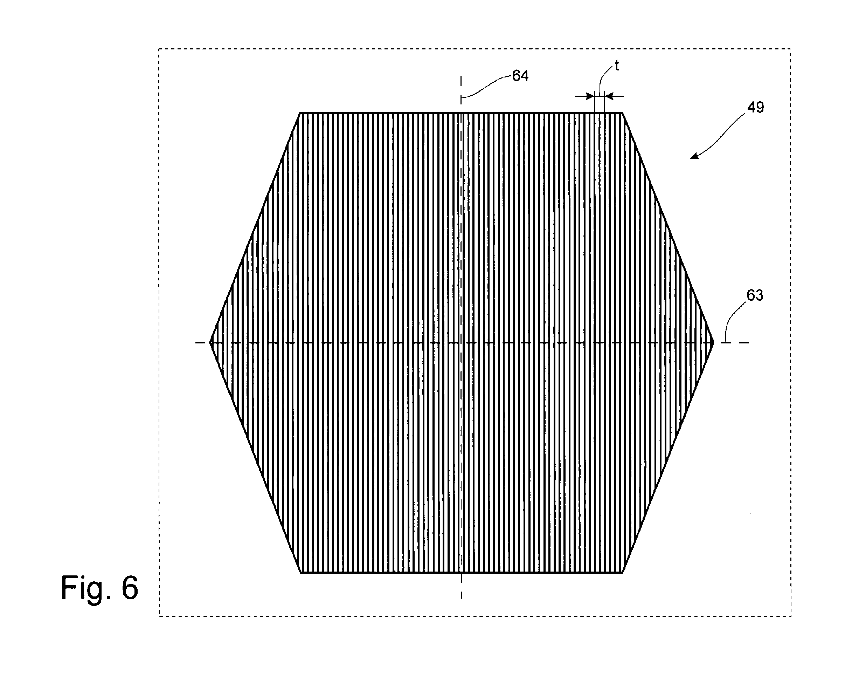

In den Figuren 5 und 6 ist eine erste Ausführungsform der Zahnplatte 49 dargestellt, die für eine Anbringung am Läufer 45 vorgesehen ist. Die Zahnplatte 49 weist in einer schematisch dargestellten Querschnittsebene 62, die identisch mit der Darstellungsebene der Figur 6 ist, einen sechseckigen, zu den beiden Hauptachsen 63, 64 jeweils spiegelsymmetrischen Querschnitt auf. Der Querschnitt der Zahnplatte 49 ist dadurch gekennzeichnet, dass sich die Zahnplatte 49 jeweils endseitig längs der Bewegungsachse 2, exemplarisch keilförmig, verjüngt. Die Zahnteilung t ist längs der gesamten Zahnplatte 49 konstant.

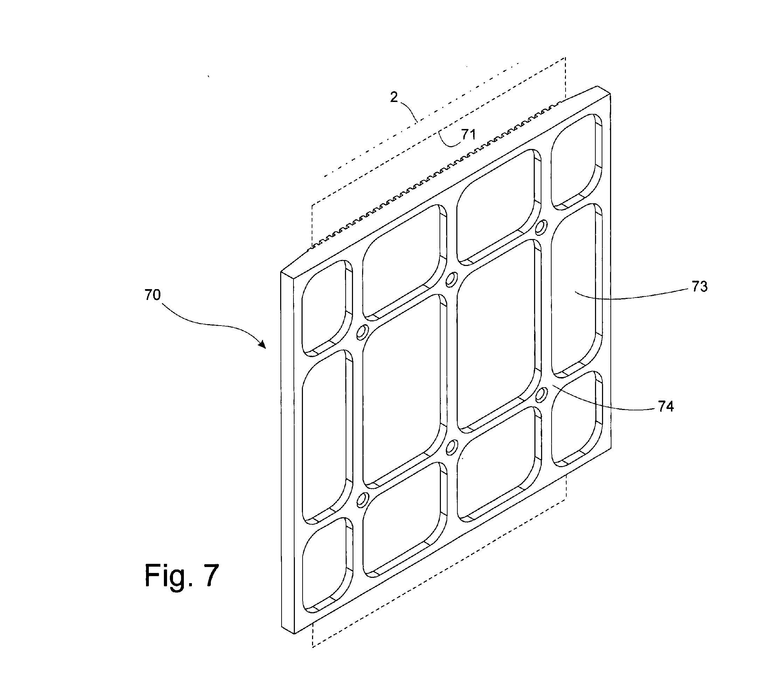

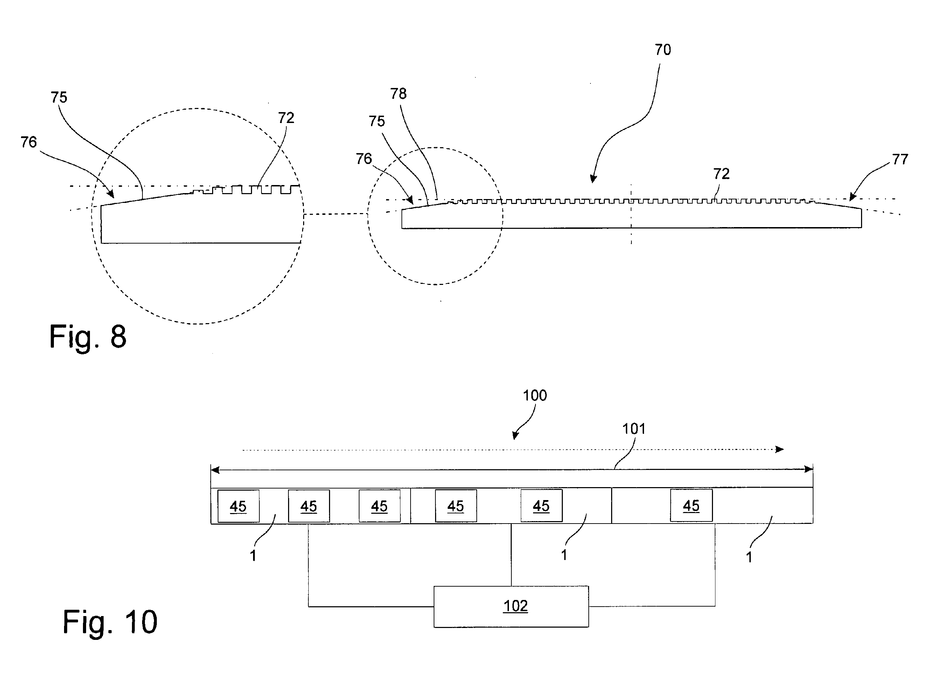

Die in den Figuren 7 und 8 dargestellten Zahnplatte 70 weist in der Querschnittsebene 71 exemplarisch einen rechteckigen Querschnitt auf. An einer den Zähnen 72 abgewandten Oberfläche der Zahnplatte 70 sind mehrere Ausnehmungen 73 ausgebildet, die durch Verstärkungsstege 74 voneinander getrennt sind, wobei die Verstärkungsstege 74 eine Versteifung der Zahnplatte 70 bei geringem Gewichtszuwachs gewährleisten. Jeweils endseitig längs der Bewegungsachse 2 sind an der mit den Zähnen 72 versehenen Oberfläche der Zahnplatte 70 Schrägflächen 75 ausgebildet. Diese Schrägflächen 75 begrenzen zusammen mit der in Figur 8 schematisch dargestellten Oberfläche 23 des Statorsegments 1 jeweils einen keilförmigen Luftspaltabschnitt 76, 77. Die Schrägflächen 75 schließen mit einer auf den Zähnen 72 aufliegenden Berührebene 78 einen spitzen Winkel, vorzugsweise einen Winkel von 15 plus/minus 5 Grad, insbesondere einen Winkel von 15 plus/minus 1 Grad, ein.

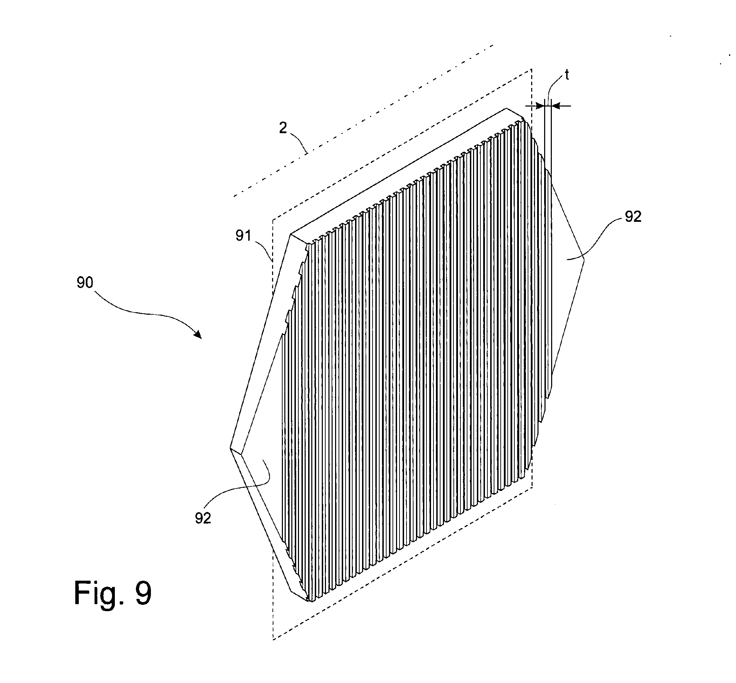

Bei der in Figur 9 dargestellten Zahnplatte 90 ist eine endseitige Verjüngung in zwei zueinander senkrechten Raumrichtungen vorgesehen. Zum einen weist die Zahnplatte 90 in der Querschnittsebene 91 einen sechseckigen Querschnitt auf, wie dies von der Zahnplatte 49 bekannt ist. Zum anderen ist die Zahnplatte 90 jeweils endseitig mit Schrägflächen 92 versehen, wie dies von der Zahnplatte 70 bekannt ist. Durch die Abschrägung in den beiden Raumrichtungen ermöglicht die Zahnplatte 90 ein besonders ruckarmes Verfahren des Läufers 45 längs des Statorsegments 1.

Das in der Figur 10 schematisch dargestellte Transportsystem 100 umfasst einen Stator 101, der aus mehreren längs der Bewegungsachse 2 aneinander gereihten Statorsegmente 1 gebildet ist. Die jeweils endseitig angeordneten Dipolstränge 3 von einander gegenüberliegenden Statorsegmenten 1 weisen entsprechend der gewählten Anzahl von unterschiedlichen elektrischen Strängen (beispielsweise 2-strängige oder 3-strängige elektrische Verschaltung) einen fest vorgegebenen Phasenversatz der gegenüberliegenden Zahngruppen 8 auf. Die Dipolstränge 3 der Statorsegmente 1 sind jeweils mit zugeordneten Steuereinrichtungen 102 elektrisch verbunden. Durch die Aufteilung des Stators 101 in die Statorsegmente 1 können die Läufer 45 auf den aneinander aufgereihten Statorsegmenten 1 in unterschiedlichen Geschwindigkeiten verfahren werden, was beispielsweise bei einem Einsatz des Transportsystems 100 in einer Fertigungsstraße für Werkstücke vorteilhaft ist. Durch die in den jeweiligen Statorsegmenten 1 vorgesehenen Wegmesssysteme 44 kann die Position jedes der Läufer 45 längs des jeweiligen Statorsegments 1 ermittelt werden, um beispielsweise einen Bremsvorgang für den Läufer 45 an einer nicht dargestellten Bearbeitungsstation bewirken zu können.

## Patentansprüche

1. Lineardirektantrieb mit einem Stator (100) und einem längs einer Bewegungsachse (2) relativbeweglich am Stator (100) angeordneten Läufer (45), wobei der Stator (100) und der Läufer (45) an einander gegenüberliegenden Oberflächen (23, 24) jeweils quer zur Bewegungsachse (2) erstreckte, magnetisch leitfähige Zähne (10; 50; 72) umfassen, die beim Läufer (45) an einer Zahnplatte (49; 70; 90) und längs der Bewegungsachse (2) in gleicher Teilung (t) angeordnet sind und die beim Stator (100) jeweils derart zu Zahngruppen (8) zusammengefasst sind, dass die Zähne (10) innerhalb einer jeweiligen Zahngruppe (8) längs der Bewegungsachse (2) äquidistant angeordnet sind und Zähne (10) benachbarter Zahngruppen (8) phasenversetzt zueinander angeordnet sind, sowie mit ersten Magnetmitteln (11) für die Bereitstellung erster, konstanter Magnetfelder an jeweils zugeordnete Zahngruppen (8) des Stators (100) und mit zweiten Magnetmitteln (9) für die Bereitstellung zweiter, einstellbarer magnetischer Felder an die Zahngruppen (8) des Stators (100), wobei die Zahnplatte (49; 70; 90) an einander entgegengesetzten Endbereichen längs der Bewegungsachse (2) in wenigstens einer Raumrichtung verjüngt ausgebildet ist und wobei der Stator (100) aus mehreren Statorsegmenten (1) aufgebaut ist, die jeweils einen Grundkörper (4) und wenigstens einen am Grundkörper (4) festgelegten Dipolstrang (3) umfassen, der wenigstens zwei zueinander phasenversetzte Zahngruppen (8) sowie erste und zweite den Zahngruppen (8) zugeordnete Magnetmittel (9, 11) umfasst.

2. Lineardirektantrieb nach Anspruch 1, **dadurch gekennzeichnet, dass** beidseitig am Grundkörper (4) längs der Bewegungsachse (2) erstreckte, jeweils separat ausgebildete Seitenwangen, die Führungsmittel zur Längsführung des Läufers aufweisen, festgelegt sind.

3. Lineardirektantrieb nach Anspruch 2, **dadurch gekennzeichnet, dass** die Seitenwangen (40) quer zur Bewegungsachse verstellbar am Grundkörper (4) angeordnet sind und mit Befestigungsmitteln (41) am Grundkörper (4) festlegbar sind.

4. Lineardirektantrieb nach Anspruch 2 oder 3, **dadurch gekennzeichnet, dass** die, insbesondere als Aluminium-Strangpressprofil ausgebildete, Seitenwange (40) eine längs der Bewegungsachse (2) erstreckte nutförmige Ausnehmung (46) aufweist, in der ein langgestrecktes, vorzugsweise rohrförmiges, besonders bevorzugt hohlzylindrisches, insbesondere aus einem nichtmagnetischen Material hergestelltes, Führungsmittel (43) zumindest über einen Teil seines Querschnitts aufgenommen und festgelegt ist.

5. Lineardirektantrieb nach Anspruch 4, **dadurch gekennzeichnet, dass** das Führungsmittel (43) von einer längs der Bewegungsachse (2) erstreckten Ausnehmung durchsetzt ist und in der Ausnehmung ein Wegmesssystem (44), insbesondere ein magnetostriktives Wegmesssystem, zur Erfassung einer Läuferposition aufgenommen ist.

6. Lineardirektantrieb nach einem der vorhergehenden Ansprüche, **dadurch gekennzeichnet, dass** der Läufer (45) wenigstens eine drehbar gelagerte, die Führungsmittel (43) bereichsweise umgreifende Führungsrolle (54) sowie wenigstens eine drehbar gelagerte, auf den Führungsmitteln (43) aufliegende Laufrolle (55) umfasst.

7. Lineardirektantrieb nach einem der vorhergehenden Ansprüche, **dadurch gekennzeichnet, dass** die Zahnplatte (70; 90) des Läufers (45) bereichsweise derart verjüngt ausgebildet ist, dass sie mit einer Oberfläche (23) des Stators (100) einen Luftspalt (48, 76, 77) begrenzt, der sich längs der Bewegungsachse (2) erweitert, insbesondere bereichsweise keilförmig ausgebildet ist.

8. Lineardirektantrieb nach einem der vorhergehenden Ansprüche, **dadurch gekennzeichnet, dass** die Zahnplatte (49; 90) des Läufers (45) in einer parallel zur Oberfläche (23) des Stators (100) ausgerichteten Querschnittsebene (71) bereichsweise verjüngt, insbesondere keilförmig verjüngt, ausgebildet ist.

9. Lineardirektantrieb nach einem der vorhergehenden Ansprüche, **dadurch gekennzeichnet, dass** der Dipolstrang (3) wenigstens zwei quer zur Bewegungsachse (2) ausgerichtete, beabstandet zueinander angeordnete Spulenträger (7) umfasst, die an einer Oberseite mit den Zähnen (10) der jeweiligen Zahngruppen (8) versehen sind und die jeweils eine quer zur Bewegungsachse (2) verlaufende schlitzförmige Ausnehmung (12) zur Aufnahme eines Spulenabschnitts aufweisen.

10. Lineardirektantrieb nach einem der vorhergehenden Ansprüche, **dadurch gekennzeichnet, dass** der Dipolstrang (3) jeweils wenigstens vier benachbart längs der Bewegungsachse (2) angeordnete Zahngruppen (8) umfasst und dass einander benachbarte Zahngruppen (8) des Dipolstrangs (3) bezogen auf ihre Anordnung längs der Bewegungsachse (2) jeweils um 180 Grad phasenversetzt angeordnet sind.

11. Lineardirektantrieb nach Anspruch 9 oder 10, **dadurch gekennzeichnet, dass** die Zahngruppen (8) eine einheitliche Zahnteilung (t) aufweisen und/oder dass Zahnlücken (17) zwischen benachbarten Zähnen (10) in der jeweiligen Zahngruppe (8) mit einer Zahnlückenteilung (z) angeordnet sind, die der Zahnteilung (t) der Zähne (10) der Zahngruppe (8) entspricht.

12. Lineardirektantrieb nach Anspruch 9, 10 oder 11, **dadurch gekennzeichnet, dass** einander gegenüberliegende Zahnflanken (18, 19) von am Spulenträger (7) ausgebildeten, benachbart angeordneten Zahngruppen (8) des Dipolstrangs (3) und/oder von Zahngruppen (8) benachbart angeordneter Spulenträger (7) des Dipolstrangs (3) um ein ganzzahliges Vielfaches (n) der Zahnteilung (t) voneinander beabstandet sind, um den Phasenversatz von 180 Grad zu gewährleisten.

13. Lineardirektantrieb nach einem der Ansprüche 9 bis 12, **dadurch gekennzeichnet, dass** einander gegenüberliegende Zahnflanken (20, 21) einander benachbarter Zahngruppen (8) benachbart angeordneter Dipolstränge (3) um ein ganzzahliges Vielfaches (n) der Zahnteilung (t) zuzüglich oder abzüglich einer viertel Zahnteilung (t) voneinander beabstandet sind, um einen Phasenversatz von 90 oder 270 Grad zu gewährleisten.

14. Lineardirektantrieb nach einem der vorhergehenden Ansprüche, **dadurch gekennzeichnet, dass** der Stator aus wenigstens zwei, vorzugsweise jeweils gleichartig geformten, Statorsegmenten (1) ausgebildet sind, die jeweils einen Grundkörper mit wenigstens einem am Grundkörper angebrachten Dipolstrang umfassen, wobei normal zur Bewegungsachse (2) ausgerichtete Stirnflächen (22) der Grundkörper (4) benachbart angeordneter Statorsegmente (1) jeweils einander gegenüberliegend angeordnet sind und einander unmittelbar gegenüberliegende Zähne (10) der aneinander aufgereihten Statorsegmente (1) einen Phasenversatz (p) nach der Gleichung p = 180/s aufweisen, wobei s der Anzahl der elektrisch unterschiedlich angeschlossenen Dipolstränge (3) entspricht.

15. Transportsystem mit einem Lineardirektantrieb nach einem der vorhergehenden Ansprüche, wobei der Stator (100) mehrere längs der Bewegungsachse (2) aneinander gereihte Statorsegmente (1) umfasst, sowie mit einer Steuereinrichtung (102) zur wahlweisen Ansteuerung der Statorsegmente (1) sowie mit Fördermitteln (103) zum Ein- und/oder Ausschleifen von Läufern auf den Stator (100) und/oder vom Stator (100), die insbesondere als endlos umlaufende Gliederketten ausgebildet sind.
